# EUROPEAN PATENT APPLICATION

(11) **EP 1 026 033 A2**
(43) Date of publication of application: **09.08.2000**
(21) Application number: 00300841.4
(22) Date of filing: 03.02.2000
(51) Int. Cl.: B60Q 1/30

(54) **Red rear signal lamps with common neon source**

(30) Priority: 03.02.1999 CZ 35499
(71) Applicant: Autopal, s.r.o., Novy Jicin 741 01 (CZ)
(72) Inventor: Vejbor, Petr, Olomouc (CZ); Cejnek, Milan, Novy Jicin (CZ); Kubena, Vladimir, Novy Jicin (CZ); Prekrska, Pavlina, Suchdol nad Odrou (CZ)
(74) Representative: Godwin, Edgar James

(57) **Abstract**

Red rear signal lamps with a common neon light source have one common neon light source (1) switched on at two levels of electric power input and, therefore, having an exactly defined section (7), (8) and light output of said neon tube (1). They further have a cylindrical and an elliptical reflectors (2), (14), and (16), whereby light energy reflected from (2) or (14) and (16) together with the light coming directly from the neon tube (1) pass on in the direction of the optical axis (3) or (15) and fall on a Fresnel's profile of a prismatic optics (4) of an optical insert (5), whereby, on the opposite side of said insert (5) pillows of diffusion optics (6) and (12) are placed that exhibit diffusion characteristics corresponding to the requirements of a brake lamp (18) and a third brake lamp (19). Between the parts of said common light source (1) of lamps (7), (8) shields (9) can be placed that delimit mutual position and prevent shine penetration. The cover lens (10) can be in the signal colour of the lamp, smoke or colourless or with a complex refractor (11) or (13) on the inner side, when at the lower voltage on the neon source, the brake lamps (18) and side lamps (17) are at the same place.

## Description

The present invention relates to lamps such as a brake, side and a third brake signalling lamp,with a common neon light source.

For light signalling, transportation vehicles use active and passive light sources. To the active ones belong esp. bulb lamps, light emitting diodes (LEDs) and vacuum tubes, to the passive ones then the reflecting catodioptrical retroreflectors and reflective coatings. The bulb and the discharge sources with a cold cathode can be provided with a two-level operation system which is technically realised by two different filaments in one bulb or by using two voltages in the other case when light is emitted only in a part of the tube and this always in the area of both electrodes.

Automobile signalling lamps with a neon light source having a cold cathode use paraboloid reflectors in the optical systems and cushion diffusion optics on the cover glass of the lamp. Often, a cylindrical prism of a Fresnel's shape of its teeth on its section is placed in front of the tube. Instead of a refractor, a diffusion focusing screen with a defined diffusion is sometimes used. Subsequently, the neon tube shape has an influence on the shape of the signalling lamp. The latest designs of the neon tubes are of a flat shape with mutually interconnected chambers that form a flat light source when switched on. Electro-technical possibilities of the design of neon tubes make possible to produce light sources of optional colour and of a continually lighting up discharge in the tube.

The red rear signalling lamps with a common neon light source according to the present invention make possible, by means of cylindrical and elliptical reflectors, one neon tube, a collimating prismatic Fresnel's refractor and diffusion pillows under a cover lens, to form two rear brake lamps and a third central brake lamp as a complete brake light signal on the rear side of a vehicle.

To use one light source consisting in a low-pressure neon tube, designed to be used in automobile signalling lamps, together for three signalling lamps is made possible by the length of such a neon tube, the optics of reflectors used, and the different length of the tube lighting up at different voltages.

The feature to be able to light up only along a specific length between both electrodes of said neon tube at a specific lower voltage and to light up along full length of the tube at a higher voltage is used for side lamps, brake lamps and a third brake lamp according to this invention. The partially lit up tube emits with a lower intensity at its ends with electrodes and at a time of the full lighting up the intensity of the emitted light increases also in these places.

In case of a design having both the brake and the side signalling lamps with a common section said neon tube, the same cylindrical reflectors, returning the emitted light energy into the optical axis direction, are placed approximately in the first and the last length quarter of a linear neon tube. The reflector dimensions can be small thanks to lower temperatures of the light source in comparison to a bulb light source.

In the central part of the neon tube a cylindrical reflector of elliptical section is used, whereby, said common neon tube is situated in one ellipse focus and a cylindrical optics reflecting rays into the direction co-linear with the optical axis of the side and brake lamps is placed in the other ellipse focus. Choice of ellipse characteristics and its inclination with regard to the vertical axis provides the design with possibilities enabling wide field of applications in design of the automobile rear side. Use of one light source only for all functions of the red signalling lamps except for the fog one substantially decreases the otherwise higher costs of this non-traditional light source at present.

The cylindrical reflector is slightly offset with regard to the focus with the neon tube to decrease shading of the discharge image. The lamp depth significantly determines the distance of the prismatic Fresnel's refractor, the dimension of which is limited by an aperture and by the angle of incidence on the profile border teeth of the prismatic optics in this case. In case of a greater lamp width and, consequently, also of greater ray angles of incidence in the plane which is perpendicular to the plane defined by the optical axis of the lamp and the neon tube, catodioprical optics can be applied successfully exhibiting loss of about 30 % of the light intensity. The required diffusion of individual lamps is obtained by corresponding pillow optics on the far side of the optical insert carrying the Fresnel's optics. If the diffusion optics is formed directly on surfaces of prisms of the Fresnel's refractor, the design of a grouped signalling lamp with a common neon tube can be further minimised because no optical insert is so necessary. The described optics of a complex refractor is placed on the inner side of the cover lens of a grouped signal lamp with a common neon source. The lamp cover can be of the signal colour of the lamp, colourless or smoke, as the discharge itself is already of the signal colour. Light energy for the third brake lamp can be brought from the specified section to a desired place by means of a flat light conductor that can have diffusion pillows on its inner reflecting surface and the output area of the light conductor forms the cover lens of a third brake lamp at the same time.

### Brief Description of the Drawings

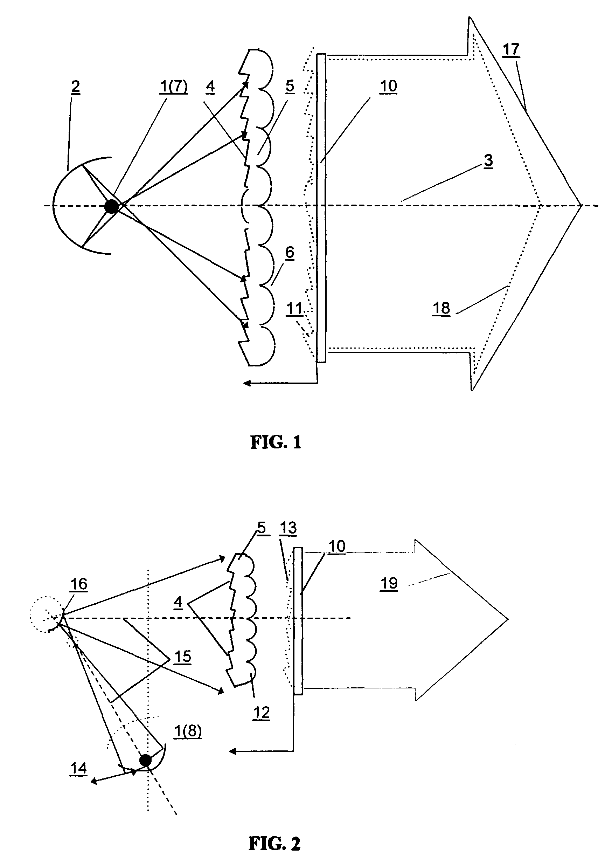

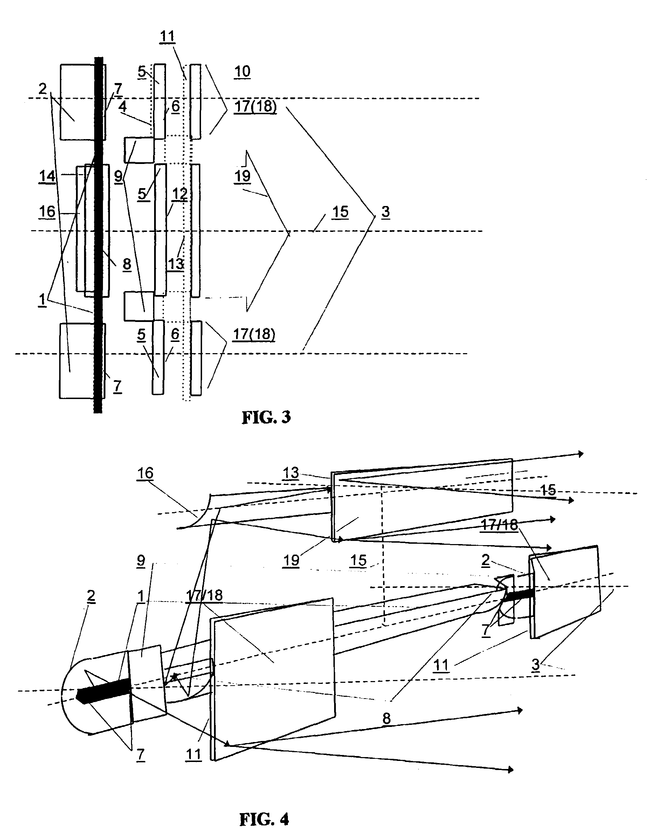

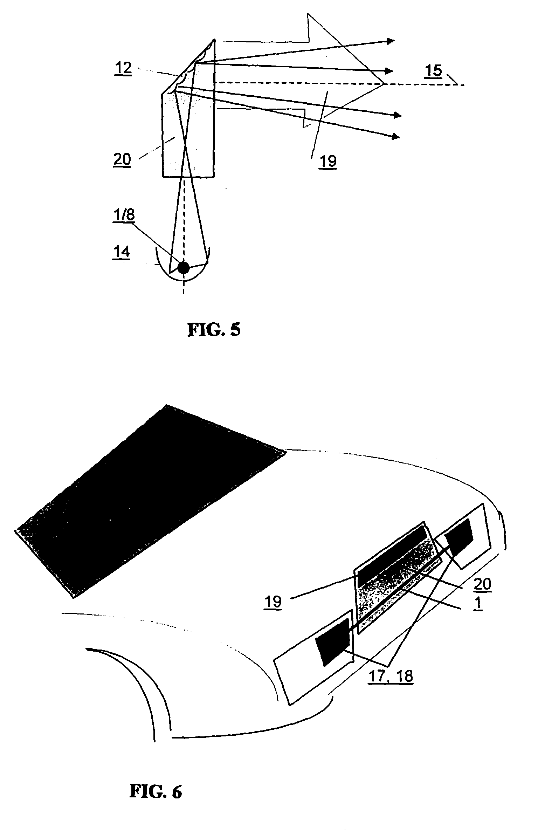

Figure 1 shows an optical scheme of a grouped brake/side signal neon lamp with common neon tube with a cylindrical reflector, prismatic Fresnel's refractor and a cover lens of a lamp, and Figure 2 shows an optical scheme of a third break lamp with the same light source and elliptical and cylindrical reflectors, a refractor and a cover lens of a lamp. Figure 3 shows a top view of the whole optical scheme of all red lamps with a common neon tube, and Figure 4 shows a view of an arrangement of red rear signal lamps with a common neon tube and a complex refractor. Figure 5 shows a detail of an optical scheme of a part of a neon tube with a light conductor as the third brake lamp,and Figure 6 shows an example of an arrangement of red signal lamps in the rear side of an automobile.

### Detailed Description of the Invention

Figures 1 and 2 show an optical scheme of a brake lamp 17, a side lamp 18,and a third brake lamp 19, as signalling lamps with a common neon tube 1 which is placed in front of a cylindrical reflector 2, 16 of a circular section or in front of an elliptical reflector 14. Light energy reflected from said cylindrical reflector 2 or from reflectors 14 and 16 together with direct light emitted by said neon tube 1 is passing in the direction of the optical axis 3 or 15 and falls on a prismatic Fresnel's refractor 4 of an optical insert 5. On the other side of each optical insert 5 diffusion pillows 6 and 12 are placed. Their diffusion characteristics correspond to the requirements of said brake lamp 17 and said third brake lamp 19. Shields 9 limiting mutual shine penetration can be placed between the parts of said prismatic Fresnel's refractors 4 of said lamps 17, 19. A cover lens 10 can have the signal colour of said lamp, be smoke or colourless and can bear a complex refractor 11, 13 on its inner side.

Red rear signal lamps with a common neon source can be used in transportation, e.g. in road transport. A common light source for the light facilities on both sides provided with a two-level switching-on compensates the higher costs.

## Claims

1. Signalling lamps with a common neon light source, characterised in that said light source is a common neon tube (1), which tube (1) is switched on at two levels of electric power input and, therefore, the light source is an exactly defined section (7, 8) and light output of said neon tube (1), further, that they have a cylindrical reflector (2, 16) and an elliptic reflector (14) that reflect light of said neon tube (1) into the direction of the optical axis (3 or 15) onto a prismatic Fresnel's refractor (4) of an optical insert (5), wherein, on the far side of said insert (5) diffusion pillows (6 or 12) are placed, wherein, said pillows (6 or 12) exhibit diffusion characteristics that correspond to the requirements of a brake lamp (17) or a side lamp (18) or a third brake lamp (19), wherein, between said sections (7, 8) of said neon tube (1) of said lamps (17 and 19) shields (9) are optionally placed that delimit mutual positions and mutual shine penetration and further a cover lens (10), optionally having the lamp signal colour, being smoky or clear, optionally with a complex refractor (11 , 13) at the inner side, wherein, optionally, functions of the cylindrical reflector (16), the prismatic Fresnel's refractor (4) and the diffusion pillows (12) on said optical insert (5) and the cover lens (10) with optional complex reflector (13) can be substituted by a flat light conductor (20).

2. Lamps according to Claim 1 ,characterised in that they are comprised of a common neon tube (1) with electrical differentiation of lighting up a defined section (7) for the required signal, a side lamp (17) and a brake lamp (18), a cylindrical reflector (2) and on said optical insert (5) a prismatic Fresnel's refractor (4) at one side and diffusion pillows (6) at the other side, wherein the optics is optionally integrated into a complex refractor (11) which is placed at the inner side of said lamp cover lens (10),which is placed at the focal length in this case.

3. Lamps according to Claim 1 or 2, characterised in that the central section (8) of said common neon tube (1) is used for said third brake lamp (19), wherein, by means of an elliptic reflector (14) and cylindrical reflector (16), light falls on a raised optical insert (5), wherein said insert (5) carries a prismatic Fresnel's refractor (4) at one side and diffusion pillows (6) at the other side and further said light falls on a cover lens (10) of said third brake lamp (19), but if there is a complex refractor (13) at the inner side of said cover lens (10), said optical insert (5) with optics is not present.

4. Lamps according to Claim 1, 2 or, 3, characterised in that said cover lens (10) of lamps has red colour, is smoke or colourless.

5. Lamps according to Claim 1, 3 or 4, characterised in that several brake lamps (17), side lamps(18) placed on both vehicle sides, including a third brake lamp (19), are using one light source.

6. Lamps according to Claim 1, 3, 4 or 5, characterised in that light energy for said third brake lamp (19) can be conducted from the delimited section (8) to the required place also by means of a flat light conductor (20) which can have diffusion cushions (6) on the inner reflecting surface and the output surface of said light conductor (20) forms simultaneously said cover lens (10) of said third brake lamp (19).
